(19) **Europäisches Patentamt / European Patent Office / Office européen des brevets**

(11) **EP 2 169 202 B1**

(12) **EUROPEAN PATENT SPECIFICATION**

(45) Date of publication and mention
of the grant of the patent:
**11.04.2018 Bulletin 2018/15**

(51) Int Cl.:
*F02D 41/30* *(2006.01)*      *F02D 41/40* *(2006.01)*
*F02D 13/02* *(2006.01)*

(21) Application number: **09012289.6**

(22) Date of filing: **28.09.2009**

(54) **Control of spark ignited internal combustion engine**

Steuerung eines Ottoverbrennungsmotors

Contrôle de moteur à combustion interne à allumage commandé

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.09.2008 JP 2008247541**

(43) Date of publication of application:
**31.03.2010 Bulletin 2010/13**

(73) Proprietor: **Mazda Motor Corporation
Aki-gun
Hiroshima 730-8670 (JP)**

(72) Inventors:
• **Shishime, Kouji**
  **Hiroshima 730-8670 (JP)**
• **Matsuo, Naoya**
  **Hiroshima 730-8670 (JP)**
• **Yamakawa, Masahisa**
  **Hiroshima 730-8670 (JP)**

• **Fujikawa, Tatsuya**
  **Hiroshima 730-8670 (JP)**
• **Youso, Takashi**
  **Hiroshima 730-8670 (JP)**
• **Nishimoto, Toshiaki**
  **Hiroshima 730-8670 (JP)**
• **Yamaguchi, Naohiro**
  **Hiroshima 730-8670 (JP)**
• **Ohashi, Mikinori**
  **Hiroshima 730-8670 (JP)**

(74) Representative: **Müller-Boré & Partner
Patentanwälte PartG mbB
Friedenheimer Brücke 21
80639 München (DE)**

(56) References cited:
**EP-A1- 0 849 459        EP-A2- 1 233 151
WO-A1-00/52317          JP-A- 62 191 622
JP-A- 2008 088 874      US-A1- 2007 227 503**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Background

The present description relates to control of a spark ignited internal combustion engine having a fuel injector which directly injects fuel into the combustion chamber.

To improve efficiency of an internal combustion engine, particularly for an automotive vehicle, it is preferred that a geometric compression ratio of the internal compression ratio is greater. However, a greater compression ratio causes a temperature in the combustion chamber to be higher. An excessively high temperature in the combustion chamber causes abnormal combustion such as knocking and pre-ignition.

The knocking occurs after the spark ignition. The spark starts combustion of air fuel mixture in the combustion chamber. The combusted gas expands and compresses un-combusted air fuel mixture. A temperature of the compressed air fuel mixture rises, and the un-combusted air fuel mixture ignites itself when the temperature reaches at the ignition temperature.

On the other hand, the pre-ignition occurs before the spark ignition. The air fuel mixture is compressed and its temperature rises during the compression stroke. If the temperature reaches the ignition temperature before the spark, the whole air fuel mixture ignites itself. Therefore, the pre-ignition may cause a higher pressure in the combustion chamber than the knocking does.

There is known, and for example described in US2007/0227503A1, a divisional fuel injection method which injects a first stage fuel in the intake stroke and a second stage fuel in the compression stroke during a cylinder cycle. The second stage fuel is injected into the compressed, relatively hot air fuel mixture and cools it down. Therefore, it can decrease the temperature in the combustion chamber and suppress the possibility of occurrence of abnormal combustion.

The prior method can reduce the possibility of occurrence of knocking, but it still does not suppress enough the possibility of occurrence of pre-ignition in a spark ignited internal combustion engine having a relatively high compression ratio. Therefore, there is room to improve the prior divisional fuel injection method.

EP 0 849 459 A1 discloses a spark ignition type in-cylinder injection internal combustion engine in which, prior to the fuel injection during the compression stroke, fuel is injected during an intake stroke.

WO 00/52317 discloses a fuel injection method for an internal combustion engine in which a first injection takes place during an intake stroke.

Accordingly, the object of the invention is to improve efficiency of an internal combustion engine by increasing a geometric compression ratio and, at the same time, avoid or prevent the occurrence of knocking and pre-ignition.

This object is achieved by the features of the independent claims. Further developments of the invention are defined in the dependent claims.

Summary

The inventors herein have rigorously studied to suppress the possibility of occurrence of pre-ignition with the prior divisional fuel injection method and unexpectedly found a method to suppress enough the pre-ignition possibility which is described in the present description.

Accordingly, there is provided, in one aspect of the present description, a method according to claim 1.

According to the first aspect, when the engine speed is relatively low, the second stage fuel is injected in the late compression stroke. The second stage fuel receives heat from a combustion chamber wall such as a cylinder wall, a piston top and a cylinder ceiling during a period between the injection and the ignition. That heat receiving period starts in the late compression stroke. Therefore, it is shorter, and the heat received by the second stage fuel is less. Then, molecules of the second stage fuel are in less motion, and they do not collide with the oxygen molecules fast enough to ignite themselves. Consequently, a possibility of pre-ignition of the second stage fuel is less.

In the same occasion, the first stage fuel is injected much earlier than the second stage fuel is, and it receives more heat from the combustion chamber wall and is more likely to cause a pre-ignition. However, the amount of the first stage fuel is less than the amount of the second stage fuel. Therefore, less of the fuel molecules collide with the oxygen molecules, and the exothermal reaction caused by the collision causes less heat. As a result, a temperature of the first stage fuel is temporarily decreased at the injection timing of the second stage fuel and does not reach the ignition temperature before the spark ignition. Consequently, any of the first and second stage fuels may not be pre-ignited before the spark ignition.

Even though the heat receiving period of the second stage fuel is short enough to suppress the pre-ignition of the second stage fuel, it is long enough to atomize/evaporate the second stage fuel since it is done when the engine speed is relatively low.

On the other hand, when the engine speed is relatively high, the heat receiving period is shorter and the possibility of abnormal combustion is reduced. Therefore, it is possible to complete the fuel injection by the early compression stroke. It leads to taking enough time to atomize or evaporate the fuel.

There is provided, in a second aspect of the present description, a system according to claim 10.

The system according to the second aspect performs the method according to the first aspect. Therefore, the system can advantageously suppress the possibility of occurrence of pre-ignition.

In embodiments, a ratio of the amount of the second stage fuel to the total amount of the first and second stage fuel may be decreased as an engine speed of the engine increases so as to secure enough time to evaporate the injected fuel.

Further in embodiments, a ratio of the amount of the second stage fuel to the total amount of the first and second stage fuel may be increased as the desired torque of the engine is greater and/or as a temperature in the combustion chamber is higher. It can suppress the possibility of occurrence of the pre-ignition in a situation where more of the fuel molecules may collide with the oxygen molecules or the collision may be faster.

Further, in the embodiments, the negative valve overlap period may be decreased, for example, by opening the intake valve earlier during a cylinder cycle, as the desired engine torque increases so as to induct more fresh air into the combustion chamber for the greater engine torque.

Still further, in the embodiments, the injected fuel may be ignited with a spark after a top dead center of the compression stroke during the cylinder cycle when the second stage fuel is injected so as to suppress the possibility of occurrence of knocking in addition to the possibility of pre-ignition. Preferably, the fuel is injected at a first pressure when the fuel injection is completed by the early compression stroke during the cylinder cycle, and the fuel is injected at a second pressure when the second stage fuel is injected. The second pressure may be greater than the first pressure so as to enhance the evaporation/atomization of the second stage fuel which is injected in the highly pressurized gas and at a timing closer to the ignition timing.

Still further, in embodiments, the intake valve may be opened after closing the exhaust valve, and the first stage fuel may be injected after the opening the intake valve It can enhance the evaporation/atomization of the first stage fuel because the pressure in the combustion is greatly negative just before the intake valve opening and a flow rate of the intake air is greater after the intake valve opening.

Further, the invention provides a computer program product comprising computer-implemented instructions which, when loaded and executed on a suitable system, such as an engine controller, can perform the steps of a method, as described above, wherein the computer program product is particularly embodied as a computer-readable storage medium, as a signal and/or as a data stream.

Further, in embodiments, the spark ignited internal combustion engine may have a geometric compression ratio of 14 or greater so that an engine operating efficiency at a condition where the abnormal combustion is not likely to occur can be improved.

In still other embodiments, the spark ignited internal combustion engine may have a turbocharger or a mechanical supercharger to increase air charge in the cylinder so that an engine output torque increases without increasing the possibility of the pre-ignition.

Brief Description of the Drawings

The advantages described herein will be more fully understood by reading an example of embodiments in which the above aspects are used to advantage, referred to herein as the Detailed Description, with reference to the drawings wherein:

Fig. 1 is a schematic view showing a spark ignition internal combustion engine according to an embodiment of the present description;
Fig. 2 shows a flowchart of routine R1 executed by an engine controller 100 of Fig. 1;
Fig. 3 shows a flowchart of routine R2 executed by the engine controller 100 of Fig. 1;
Fig. 4 shows a diagram illustrating a target phase of an intake camshaft phase adjusting mechanism 32 of Fig. 1;
Fig. 5 shows a diagram illustrating a valve overlap profile between intake and exhaust valves 21 and 22 of Fig. 1;
Fig. 6 shows an operational map of fuel injection in accordance with the embodiment;
Fig. 7 shows diagrams illustrating states of operation of the intake valve, exhaust valve, fuel injection and spark ignition in accordance with the embodiment;
Fig. 8 shows a diagram illustrating a profile of fuel division ratios with respect to the engine speed and target air charge;
Fig. 9 shows a diagram illustrating a profile of fuel division ratios at a specific engine speed and target air charge condition with respect to an intake air temperature; and
Fig. 10 is a graph showing a relationship between a percentage of the second stage fuel to the total amount of the fuel and a greatest effective compression ratio with which the pre-ignition does not occur at a certain condition.

Detailed Description

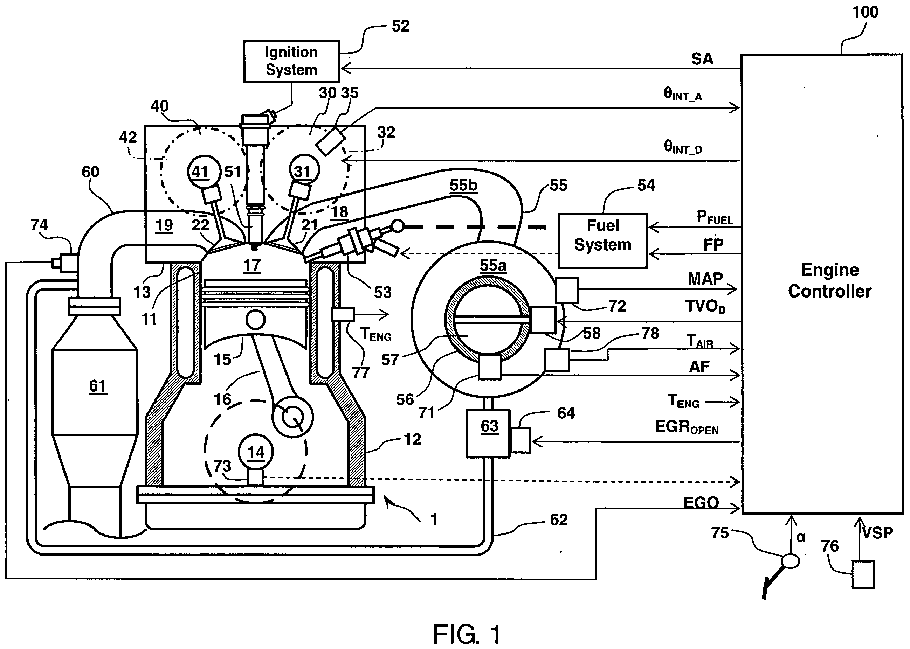

Embodiments of the present description will now be described with reference to the drawings, starting with Fig. 1, which illustrates a schematic diagram of an entire engine system having a spark ignited internal combustion engine 1. The engine system includes an engine main body (internal combustion engine) 1 and an engine controller (control module) 100, which is configured to control various actuators associated with the engine main body 1.

The engine main body 1 is a four-cycle spark-ignited internal combustion engine installed in a vehicle, such as an automobile. An output shaft of the engine main body 1 is coupled to a drive wheel via a transmission in order to drive the vehicle. The engine main body 1 includes a cylinder block 12 and a cylinder head 13 placed thereon. Inside the cylinder block 12 and the cylinder head 13, a plurality of cylinders 11 are formed. The number of cylinders 11 is not limited; however, four cylinders 11 are formed in this embodiment, as one example. Further, in the cylinder block 12, a crankshaft 14 is supported rotatably by a journal, a bearing and the like.

To each of the cylinders 11, a piston 15 is slideably inserted and fitted, over which a combustion chamber 17 is laid out.

In this embodiment, a geometric compression ratio of the engine main body 1 is set to approximately 14, which is the ratio of the volume of the combustion chamber 17 when the piston 15 is positioned at the bottom dead center to the volume of the combustion chamber 17 when the piston 15 is positioned at the top dead center. Of course, the value of the geometric compression ratio is not limited to 14. For example, it may be preferable that the geometric compression ratio is higher from the point of view of improving engine efficiency. However, as the geometric compression ratio is set higher, an in-cylinder temperature can become too high in the compression stroke, thus increasing the possibility of an auto-ignition occurring at an unexpected timing. Thus, the geometric compression ratio of the engine main body 1 may be, preferably, between 14 and 16, but is not limited to this range, especially if the engine is supercharged or turbocharged.

The cylinder head 13 is formed with two intake ports and two exhaust ports communicating with the respective one of the combustion chambers. In Fig. 1, one intake port 18 and one exhaust port 19 are shown, though two intake ports and two exhaust ports per cylinder are included in this embodiment, as described above. Further, the cylinder head 13 is provided with intake valves 21 blocking the respective intake ports 18 from the combustion chamber 17 and exhaust valves 22 blocking the respective exhaust ports 19 from the combustion chamber 17. The intake valves 21 are driven by an intake valve driving mechanism 30, described later, to open and close the respective intake ports 18 at a predetermined timing. On the other hand, the exhaust valves 22 are driven by an exhaust valve driving mechanism 40 to open and close the respective exhaust ports 19.

The intake valve driving mechanism 30 and the exhaust valve driving mechanism 40 preferably have an intake camshaft 31 and an exhaust camshaft 41, respectively. The intake camshaft 31 and the exhaust camshaft 41 are coupled to the crankshaft 14 via a power transmission mechanism such as a known chain-sprocket mechanism. The power transmission mechanism is configured such that the camshafts 31 and 41 rotate one time while the crankshaft 14 rotates two times.

Further, in the intake valve driving mechanism 30, there is provided an intake camshaft phase changing mechanism 32 between the power transmission mechanism and the intake camshaft 31. The intake camshaft phase changing mechanism 32 is set to change the valve timing of the intake valve 21, in which a phase difference between the crankshaft 14 and the intake camshaft 31 is changed by changing the phase difference between the driven shaft, which is arranged concentrically with the intake camshaft 31 and is directly driven by the crankshaft 14, and the intake camshaft 31.

The intake camshaft phase changing mechanism 32 includes, for example, a hydraulic pressure mechanism where a plurality of liquid chambers are arranged in a circumferential direction between the driven shaft and the intake camshaft 31 and a pressure difference is given between the liquid chambers to change the phase difference, and an electromagnetic mechanism where an electromagnet is provided between the driven shaft and the intake camshaft 31, and the electromagnet is applied with current to change the phase difference. The intake camshaft phase changing mechanism 32 changes the phase difference based on the valve timing of the intake valve 21 calculated by the engine controller 100, described later.

In this embodiment, the intake camshaft phase changing mechanism 32 changes the valve opening timing IVO and valve closing timing IVC of the intake valve 21 by changing the phase difference while the lift amount (i.e., a valve profile of the intake valve 21) is kept constant. A phase angle of the intake camshaft 31 is detected by a cam phase sensor 35, and a signal $\theta_{INT\_A}$ thereof is transmitted to the engine controller 100.

Also, in the exhaust valve driving mechanism 40, there is provided an exhaust camshaft phase changing mechanism 42 between the power transmission mechanism and the intake camshaft 41. The exhaust camshaft phase changing mechanism changes the valve opening timing EVO and valve closing timing EVC of the exhaust valve 22 in the same manner as in the intake camshaft phase changing mechanism.

The intake port 18 communicates with a surge tank 55a via an intake manifold 55b. The air intake passage upstream of the surge tank 55a is preferably provided with the throttle body (throttle valve actuator) 56. A throttle valve 57 is pivotally provided inside the throttle body 56 for adjusting the intake flow volume flowing from the external to the surge tank 55a. The throttle valve 57 can change the opening area of the air intake passage (i.e., the flow passage area) to change the intake flow volume, and the pressure in the air intake passage downstream of the throttle valve 57. The throttle valve 57 is actuated by a throttle valve actuator 58. The throttle valve actuator 58 actuates the throttle valve 57 such that the opening TVO of the throttle valve 57 is to be a target throttle valve opening $TVO_D$ calculated in the engine controller 100. Here, the air intake passage 55 may include all of the intake port 18, the intake manifold 55b and the surge tank 55a downstream of the throttle valve 57. In this embodiment, an amount of air to be inducted into the cylinder 11, that is, the air charge amount CE inside the cylinder 11 is controlled to have an adequate value by adjusting the opening of the throttle valve 57 and the closing timing of the intake valve 21.

The exhaust port 19 communicates with an exhaust pipe via an exhaust manifold 60. In the exhaust pipe, an exhaust gas treatment system is arranged. A specific constitution of the exhaust gas treatment system is not limited to, but may include those having a catalytic converter 61 of a three-way catalyst, a lean NOx catalyst, an oxidation catalyst and the like.

The surge tank 55a and the exhaust manifold 60 preferably communicate with each other via an EGR pipe 62, constituted such that a part of the exhaust gas may be circulated to an intake side. Provided in the EGR pipe 62 is an EGR valve 63 for adjusting the flow volume of EGR gas circulating to the intake side through the EGR pipe 62. The EGR valve 63 is actuated by an EGR valve actuator 64. The EGR valve actuator 64 actuates the EGR valve 63 such that the opening of the EGR valve 63 becomes an EGR opening $EGR_{open}$ calculated by the engine controller 100. This makes it possible to adjust the flow volume of the EGR gas to an adequate value.

The cylinder head 13 has spark plugs 51 attached thereto such that a tip of each spark plug faces the combustion chamber 17. The spark plug 51 generates a spark in the combustion chamber 17 when supplied with current by an ignition system 52, based on an ignition timing signal SA output from the engine controller 100, described later in detail.

Further, the cylinder head 13 has fuel injectors 53 attached thereto for injecting fuel directly into the respective combustion chambers 17 such that a tip of each of the fuel injectors faces the combustion chamber 17. In more detail, the fuel injector 53 is arranged such that the tip thereof is positioned below the two intake ports 18 in a vertical direction, and midway between the two intake ports 18 in a horizontal direction. The fuel injector 53 injects a predetermined amount of fuel into the combustion chamber 17 when a solenoid coupled to the fuel injector 53 is supplied with current by a fuel system 54 for a predetermined period of time based on a fuel pulse signal FP calculated by and output from the engine controller 100. The fuel system 54 includes a pressure regulator and supplies fuel to the fuel injectors 53 at a fuel pressure in accordance with a fuel pressure signal $P_{FUEL}$ calculated by and output from the engine controller 100.

The engine controller 100 is a controller having a known microcomputer as a base and includes a CPU for executing a program, a memory such as RAM and ROM for storing a program and data, and an I/O bus for inputting and outputting various signals.

The engine controller 100 receives inputs via the I/O bus, with various information such as an intake airflow AF detected by an air flow meter 71, an air pressure MAP inside the surge tank 55a detected by an intake pressure sensor 72, a crank angle pulse signal detected by a crank angle sensor 73, an oxygen concentration EGO of the exhaust gas detected by an oxygen concentration sensor 74, an amount $\alpha$ of depression of an accelerator pedal by a driver of the automobile detected by an accelerator pedal position sensor 75, a vehicle speed VSP detected by a vehicle speed sensor 76, an engine temperature $T_{ENG}$ detected by an engine coolant temperature sensor 77, and an intake air temperature $T_{AIR}$ detected by an intake air temperature sensor which detects a temperature inside the surge tank 55a or a temperature upstream of the throttle body 56. Then, the engine controller 100 calculates control parameters for various actuators such that the air charge amount, ignition timing and the like in the cylinder 11 may be an appropriate value according to the operating conditions based on the input information. For example, the control parameters such as a throttle valve opening TVO, the fuel injection amount FP, the fuel pressure $P_{FUEL}$, the ignition timing SA, a target value of the intake valve timing $\theta_{INT\_D}$ and the EGR opening $EGR_{open}$ are calculated and output to the throttle valve actuator 58, the fuel system 54, the ignition system 52, the intake camshaft phase changing mechanism 32, the EGR valve actuator 64 and the like.

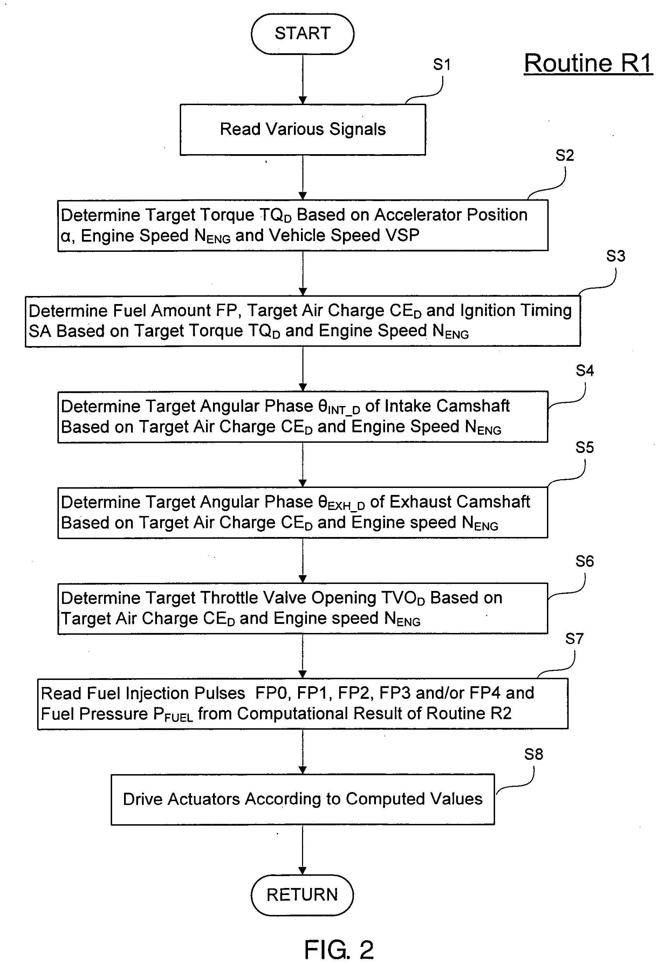

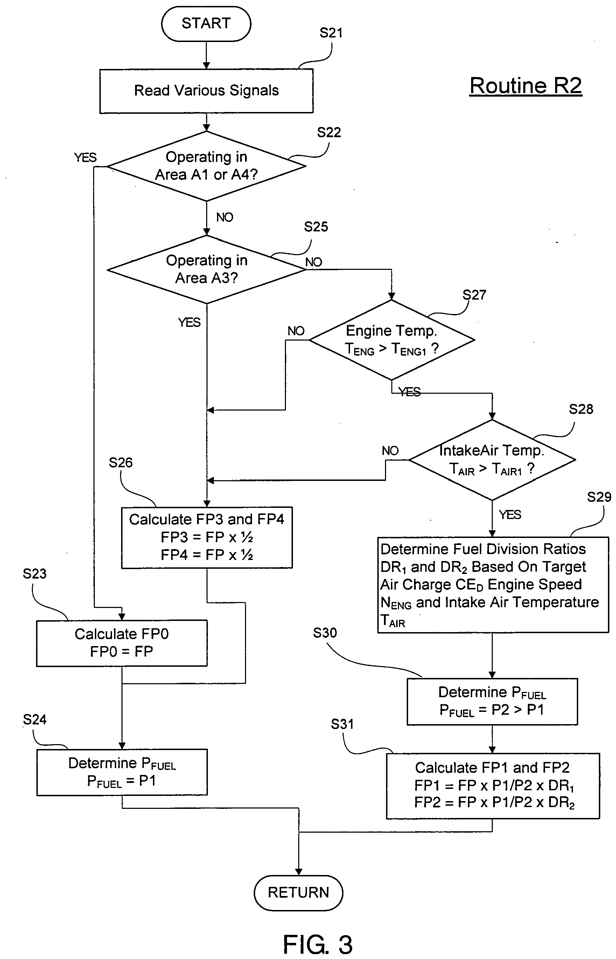

Control routines the engine controller 100 executes will be described with reference to flowcharts illustrated in Figs. 2 and 3.

Referring to Fig. 2, there is shown a flowchart of a first routine R1 for the engine controller 100 to input and output signals with the various devices described above. After the start, at a step S1, the first routine R1 reads various signals such as the accelerator position $\alpha$. It proceeds to a step S2 and determines a target torque $TQ_D$ based on the accelerator pedal position $\alpha$, the engine speed $N_{ENG}$ of the engine 1 (calculated from the crank angle pulse signal) and the vehicle speed VSP. After the step S2, it proceeds to a step S3 and determines a fuel amount FP, a target air charge $CE_D$ (a target value of the air charge amount CE in the cylinder 11) and an ignition timing SA based on the target torque $TQ_D$ and engine speed $N_{ENG}$. The fuel amount FP and target air charge $CE_D$ are determined to increase as the target torque $TQ_D$ increases.

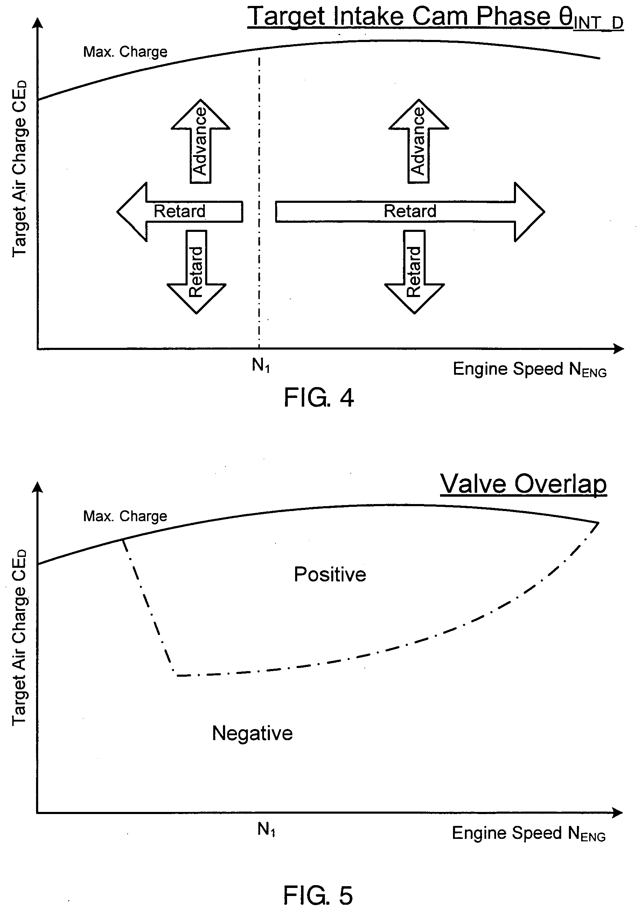

Then, the first routine R1 proceeds to a step S4 and determines a target angular phase $\theta_{INT\_D}$ of the intake camshaft 31 based on the target air charge $CE_D$ and the engine speed $N_{ENG}$ determined in a step S3 by reading data in a table expressed by a map illustrated in Fig. 4. Therein, the target angular phase $\alpha_{INT\_D}$ of the intake camshaft 31 is set to retard as the engine speed $N_{ENG}$ increases when it is greater than a predefined speed $N_1$. In contrast, when the engine speed $N_{ENG}$ is less than the predefined speed $N_1$, the target angular phase $\alpha_{INT\_D}$ retards as the engine speed decreases.

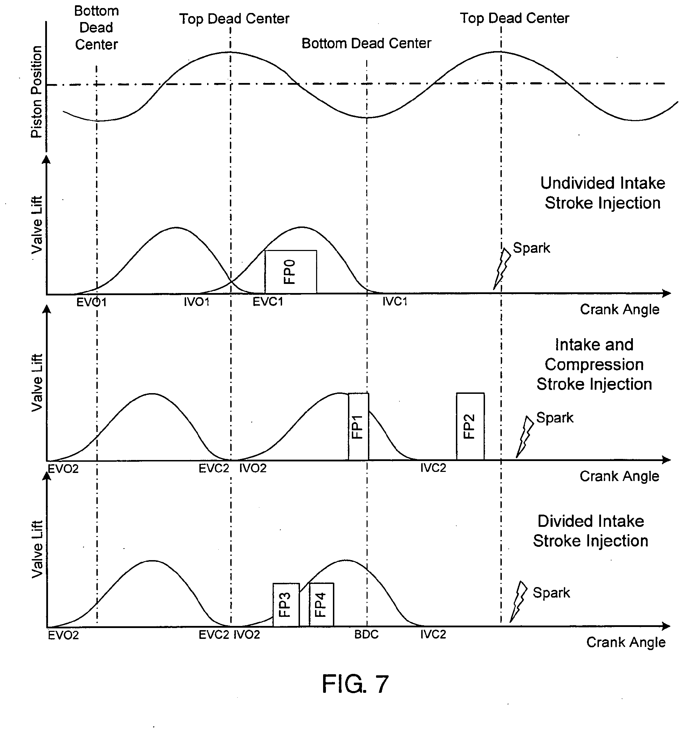

On the other hand, as the target air charge $CE_D$ increases, the target angular phase $\theta_{INT\_D}$ advances. Therefore, at a higher target charge $CE_D$ and a higher engine speed $N_{ENG}$ the intake valve 21 closes at a timing IVC1 as illustrated in the second top diagram of Fig. 7 while at a higher target air charge $CE_D$ and a lower engine speed $N_{ENG}$ the intake valve closes at a timing IVC2 which is later than the timing IVC1 in a cylinder cycle as illustrated in the second bottom diagram of Fig. 7. As a result, at the timing IVC2 the piston is substantially ascended and the air which has been inducted into the combustion chamber 17 is blown back to the intake air passage 18. Therefore, the lower target air charge in the combustion chamber 17 is obtained without substantially closing the throttle valve 57, which causes lower pressure to act on the top of the piston 15 during the intake stroke leading to pumping loss.

After the step S4, the first routine R1 proceeds to a step S5 and determines a target angular phase $\alpha_{EXH\_D}$ of the exhaust camshaft 41 based on the target air charge $CE_D$ and the engine speed $N_{ENG}$ determined in step S3. The target angular phase $\alpha_{EXH\_D}$ of the exhaust camshaft 41 changes much less than that of the intake camshaft 31 does. As a result, in one exemplary state where the target air charge $CE_D$ is relatively high and engine speed $N_{ENG}$ is relatively high as shown in a region labeled "Positive" in a map illustrated in Fig. 5, the exhaust valve 22 opens at a timing EVO1 before the bottom dead center and closes at a timing EVC1 after the top dead center during a cylinder cycle as shown in the second top diagram of Fig. 7. In this state, the intake valve 21 opens at a timing IVO1 before the top dead center and closes at a timing IVC1 after the bottom dead center during the cylinder cycle. Therefore, the intake valve 21 opens at the timing IVO1 which is before the timing EVC1 at which the exhaust valve 22 closes. Consequently, there is between the timings IVO1 and EVC1 a time in which the both intake valve 21 and the exhaust valve 22 are opened which is an overlap period.

In another exemplary state where the target air charge $CE_D$ and engine speed $N_{ENG}$ is not in the Positive region but in a region labeled "Negative" in the map of Fig. 5, the exhaust valve opens at a timing EVO2 before the bottom dead center and closes at a timing EVC2 after the top dead center during a cylinder cycle, as shown in second bottom and bottom diagrams of Fig. 7. In this state, the intake valve 21 opens at a timing IVO2 after the top dead center and closes at a timing IVC2 after the bottom dead center during the cylinder cycle. Therefore, the intake valve 21 opens at the timing IVO2 which is after the timing EVC2 at which the exhaust valve 22 closes. Consequently, there is between the timings EVC2 and IVO2 a time in which the both intake valve 21 and the exhaust valve 22 are closed which is a negative overlap period.

Referring back to Fig. 2, the first routine R1 proceeds to a step S6 and determines a target throttle valve opening $TVO_D$ as a target value of the opening TVO of the throttle valve 57 based on the target air charge $CE_D$ and the engine speed $N_{ENG}$. Then, it proceeds to a step S7 and reads pulse widths FP0, FP1, FP2, FP3 and/or FP4 of the fuel injection during a cylinder cycle and a fuel pressure $P_{FUEL}$ from a computational result of a second routine R2 described in greater detail below.

After the step S7, the first routine R1 proceeds to a step S8 and drives the respective actuators according to the computed control parameters such as the fuel injection amount FP, the fuel pressure $P_{FUEL}$, the ignition timing SA, the target intake camshaft phase $\alpha_{INT\_D}$, and the target throttle valve opening $TVO_D$. Specifically, the

signal $\alpha_{INT\_D}$ is outputted to the intake camshaft phase changing mechanism 32. Then, the intake camshaft phase changing mechanism 32 operates such that a phase of the intake camshaft 31 relative to the crankshaft 14 has a value corresponding to $\theta_{INT\_D}$. The signal $TVO_D$ is outputted to the throttle valve actuator 58. Then, the throttle valve actuator 58 operates such that the opening TVO of the throttle valve 57 has a value corresponding to $TVO_D$. The signals FP0, FP1, etc. and $P_{FUEL}$ are outputted to the fuel system 54. Then, the signal SA is outputted to the ignition system 52. The spark plug 51 produces a spark and an air-fuel mixture is ignited in the combustion chamber 17 at a timing corresponding to SA in the cylinder cycle. This causes the air-fuel mixture, including the required amount of air and fuel, to be ignited and burned at an appropriate timing such that the target torque, determined mainly from the accelerator position $\alpha$, is generated from the engine 1. After the step S8, the first routine R1 returns.

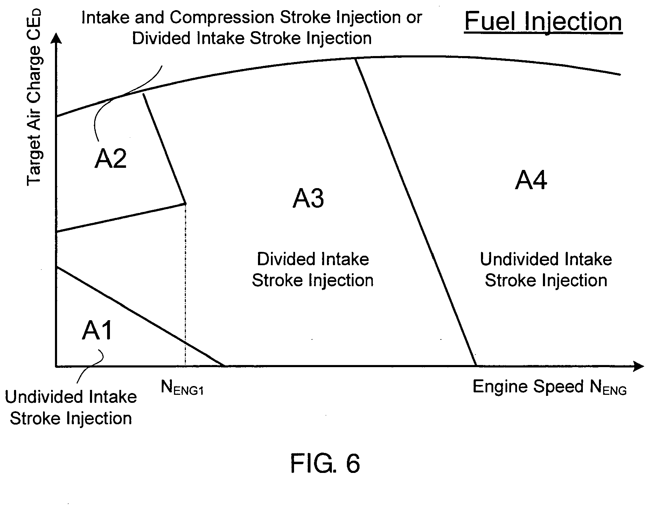

Referring to Fig. 3, there is shown a flowchart illustrating the second routine R2 which is executed for computing the fuel injection pulse widths FP0, FP1, FP2, FP3 and/or FP4 and the fuel pressure $P_{FUEL}$ that are determined in accordance with fuel injection modes in a table illustrated by the diagram of Fig. 6 and read at the step S7 of the first routine R1.

The second routine R2 chooses one of the fuel injection modes in accordance with in which one of areas A1 through A4 of Fig. 6 an engine operating condition determined by the target air charge $CE_D$ and engine speed $N_{ENG}$ is. Area A1 is provided in a lower target air charge and lower engine speed region. Area A2 is provided in a higher target air charge and lower engine speed region. Area A4 is provided in a higher engine speed region. Area A3 is provided in a region excluding the areas A1, A2 and A4. When the engine operating condition is in the area A1 or A4, an undivided intake stroke injection mode is chosen. When the engine operating condition is in the area A3, a divided intake stroke injection mode is chosen. When the engine operating condition is in the area A2, an intake and compression stroke fuel injection mode or the divided intake stroke injection mode is chosen.

Referring back to Fig. 3, after the start, the second routine R2 proceeds to a step S21 and reads various signals. Then, it proceeds to a step S22 and determines whether or not an engine operating condition determined by the target air charge $CE_D$ and engine speed $N_{ENG}$ is in the area A1 or A4 in Fig. 6. If it is determined YES at the step S22, the second routine R2 proceeds to a step S23 and calculates a one time fuel pulse width FP0 to be equal to the fuel injection amount FP which is determined at the step S3 of the first routine R1. Then, the other fuel pulse widths FP1 through FP4 remain zero. After the step S23, the second routine R2 proceeds to a step S24 and determines a fuel pressure $P_{FUEL}$ to be equal to a lower pressure P1 which is a fixed value and may be, for example, approximately 15MPa, and it returns. At the step S8 of the first routine R1, the fuel system 54 is controlled to set its fuel pressure at the lower pressure P1, and the fuel injector 53 is driven to open its nozzle at a predefined timing after the intake valve 21 opens and to close it when the pulse width FP0 has passed as illustrated in the second top diagram of Fig. 7. Therefore, the system takes the undivided intake stroke injection mode, and the fuel injector 53 injects amount of fuel corresponding to the fuel pulse width FP0 and the lower fuel pressure P1 during the intake stroke in a cylinder cycle. The end of the fuel injection is in an early compression stroke, for example, approximately 140° CA (crank angle) before the top dead center of the compression stroke, at the latest in consideration of the evaporation or atomization of the fuel.

When it is determined at the step S22 that the engine operating condition is not in the area A1 or A4 (NO), the second routine R2 proceeds to a step S25 and determines whether or not the engine operating condition is in the area A3 of Fig. 6. If it is determined YES at the step S25, the second routine R2 proceeds to a step S26 and calculates third and fourth fuel pulse widths FP3 and FP4 as described below:

$$FP3 = FP \times 1/2$$

$$FP4 = FP \times 1/2.$$

Then, since the FP3 + FP4 = FP, the other fuel pulses FP0, FP1 and FP2 remain zero. After the step S26, the second routine R2 proceeds to the step S24 and determines the fuel pressure $P_{FUEL}$ to be the lower pressure P1 as described above. At the step S8 of the first routine R1, the fuel system 54 is controlled to set its pressure at the lower pressure P1, and the fuel injector 53 is driven to open its nozzle at a predefined timing after the intake valve 21 opens and to close it when the pulse width FP3 has passed and again open its nozzle at a predefined timing and close it when the pulse width FP4 has passed as illustrated in the bottom diagram of Fig. 7. Therefore, the system takes the divided intake stroke injection mode, and the fuel injector 53 injects twice a half amount of fuel corresponding to the fuel pulse width FP and the lower fuel pressure P1 during the intake stroke in a cylinder cycle. As in the undivided intake stroke injection mode, the end of the fuel injection is in an early compression stroke, for example, approximately 140° CA (crank angle) before the top dead center of the compression stroke, at the latest in consideration of the evaporation or atomization of the fuel.

When it is determined at the step S25 that the engine operating condition is not in the area A3 of Fig. 6 (NO), in other words, it is in the area A2, the second routine R2 proceeds to a step S27 and determines whether or not the engine temperature $T_{ENG}$ detected by the engine coolant temperature sensor 77 is higher than a predetermined temperature $T_{ENG1}$. If it is determined NO at the step S27, the second routine R2 proceeds to the step S26 and the system takes the divided fuel injection mode as described above.

When it is determined at the step S27 that the engine temperature $T_{ENG}$ detected by the engine coolant temperature sensor 77 is higher than the predetermined temperature $T_{ENG1}$, the second routine proceeds to a step S28 and determines whether or not the intake air temperature $T_{AIR}$ detected by the intake air temperature sensor 78 is higher than a predetermined temperature $T_{AIR1}$. If it is determined NO at the step S28, the second routine R2 proceeds to the step S26 and the system takes the divided fuel injection mode as described above.

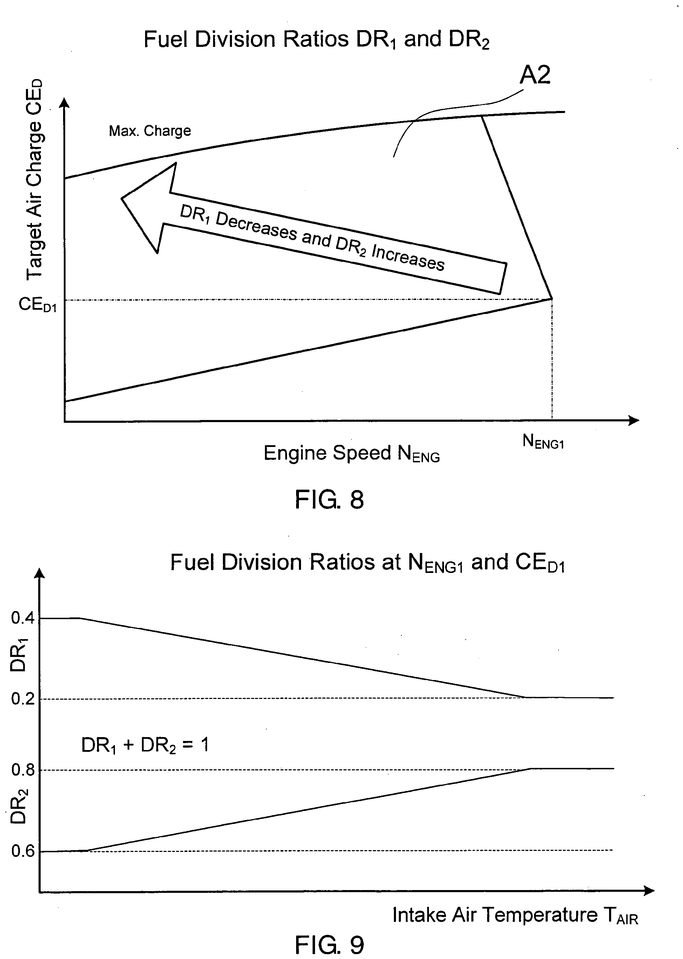

When it is determined at the step S28 that the intake air temperature $T_{AIR}$ detected by the intake air temperature sensor 78 is higher than the predetermined temperature $T_{AIR1}$, the second routine R2 proceeds to a step S29 and determines fuel division ratios $DR_1$ and $DR_2$ based on the target air charge $CE_D$, the engine speed $N_{ENG}$ and the intake air temperature $T_{AIR}$. The determination is made by reading values stored in tables, one example of which is illustrated in Fig. 8. The table defines values within the area A2 in which the division ratio $DR_1$ decreases and the division ratio $DR_2$ increases as the target air charge $CE_D$ increases or the engine speed $N_{ENG}$ decreases while the division ratio $DR_2$ is greater than the division ratio $DR_1$ and a total of the division ratios $DR_1$ and $DR_2$ remains one (1).

Further, those tables are made to decrease the ratio $DR_1$ and increase the ratio $DR_2$ as the intake air temperature $T_{AIR}$ is higher, or, in other words, a temperature in the combustion chamber 17 is higher, as shown in Fig. 9.

Referring back to Fig. 3, after the step S29, the second routine R2 proceeds to a step S30 and calculates a fuel pressure $P_{FUEL}$ to be equal to a higher pressure P2 which is greater than the constant, lower pressure P1 and may be constant and, for example, approximately 20 MPa or become greater as the intake air temperature $T_{AIR}$ rises. Then, the second routine R2 proceeds to a step S31 and calculates first and second fuel pulse widths FP1 and FP2 as described below:

$$FP1 = FP \times P1/P2 \times DR_1$$

$$FP2 = FP \times P1/P2 \times DR_2.$$

Then, since DR1 < DR2, the second fuel pulse width FP2 is greater than the first fuel width FP1. And, since $DR_1 + DR_2 = 1$ and FP1 + FP2 = FP, the other fuel pulse widths FP0, FP3 and FP4 remain zero.

After the step S31, the second routine R2 returns. At the step S8 of the first routine R1, the fuel system 54 is controlled to set its pressure at the higher pressure P2, and the fuel injector 53 is driven to open its nozzle at a predefined timing after the intake valve 21 opens and to close it when the first pulse width FP1 has passed, for example approximately at 20°CA after the bottom dead center of the intake stroke, and again to open its nozzle at a predetermined timing in a late compression stroke and closes when the second pulse width FP2 has passed, for example approximately at 20°CA before the top dead center of the compression stroke, as illustrated in the second bottom diagram of Fig. 7. Therefore, the system takes the intake and compression stroke injection mode, and the fuel injector 53 injects lesser amount of a first stage fuel corresponding to the fuel first pulse width FP1 and the higher fuel pressure P2 during the intake stroke and greater amount of a second stage fuel corresponding to the second fuel pulse width FP2 and the higher fuel pressure P2 in a cylinder cycle. Then, after the top dead center of the compression stroke, the spark plug 51 makes a spark, the first and second stage fuels are ignited.

The greater amount of the second stage fuel contributes to suppress the possibility of occurrence of pre-ignition as described in greater detail below.

A graph of Fig. 8 illustrates a relationship between a maximum effective compression ratio with which no pre-ignition occurs and the percentage of the amount of the second stage fuel to the total amount of the first and second stage fuels. As is clear from Fig. 8, as the percentage of the second stage fuel becomes greater, the maximum effective compression ratio within the range in which no pre-ignition occurs becomes greater. When the percentage of the second stage fuel is 100%, it is most advantageous in maximizing the effective compression ratio.

On the other hand, a certain amount of the first stage fuel needs to be injected in consideration of the promotion of the vaporization or atomization of the fuel and uniform air fuel mixture inside of the cylinder. More specifically, the percentage of the second stage fuel amount may be preferably selected from approximately 60% to approximately 85%. In particular, the percentage of the second stage amount may be more preferably set to approximately 75% or more (the percentage of the first stage fuel amount may be preferably approximately 25% or less, that is, approximately 1/4 or less, wherein approximately 15% or more of the first stage injection quantity should be desirably secured).

The graph of Fig. 8 plots data obtained under test conditions described below. A spark ignited direct injection engine having a geometric compression ratio of 16 is used. An engine speed is approximately 750 rpm (an idle speed for the engine was 650 rpm); the throttle valve 57 is fully opened; a heat range of the spark plug 51 is 6; an octane rating of the fuel (gasoline) is approximately 96; a fuel pressure is approximately 15 MPa; an engine coolant temperature is approximately 80°C; an intake air temperature is approximately 25°C; an absolute humidity is approximately 7.5 $g/m^3$; a timing of the end of the first stage fuel injection is approximately 160°CA before the compression top dead center (approximately 20°CA after the intake bottom dead center); a timing of the end of the second stage fuel injection is approximately 20°CA before the compression top dead center; an air fuel ratio is approximately a stoichiometric air-fuel ratio; a closing timing of the exhaust valve 22 is approximately 15°CA after the intake top dead center; a closing timing of the intake valve 21 is varied for changing the effective compression ratio; and an ignition timing is approximately 15°CA after the compression top dead center, which is a sufficient delay for detecting the pre-ignition.

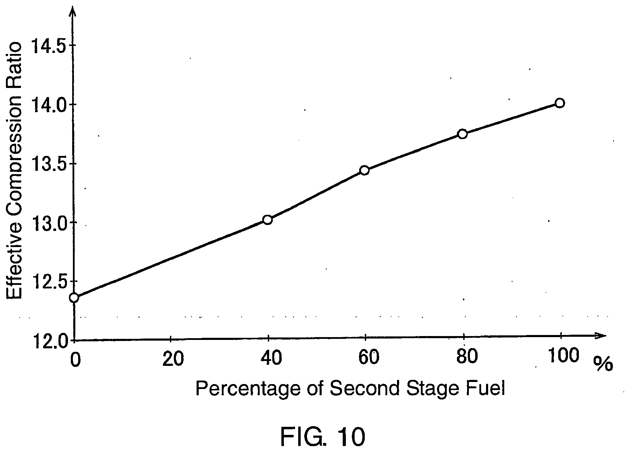

As can be seen from the graph of Fig. 10, the maximum effective compression ratio with which no pre-ignition occurs increases as the percentage of the second stage fuel amount was increased from 0% to 100% under the above-described test conditions. Therefore, it clearly shows the greater percentage of the second stage fuel amount to the total amount of the first and second stage fuel can more suppress the occurrence of the pre-ignition.

In the embodiment described above, when the engine operating condition is in the area A2 illustrated in Fig. 6 if the engine temperature $T_{ENG}$ and the intake air temperature $T_{AIR}$ are both higher than the predetermined temperatures as is determined at the steps S22, S25, S27 and S28 of the second routine R2 in Fig. 3, the system takes the intake and compression stroke injection mode. Then, the first and second stage fuels are injected at the step S8 of the first routine R1 in Fig. 2 in accordance with the fuel division ratios $DR_1$ and $DR_2$ determined at the step S29 of the second routine R2.

As shown in Fig. 8, the fuel division ratio $DR_2$ increases, which is translated to the increase of ratio of the second stage fuel amount to the total fuel amount as expressed at the step S29 of the second routine R2, as the engine speed $N_{ENG}$ decreases or the target air charge $CE_D$ increases and the possibility of occurrence of the pre-ignition increases. Also, as shown in Fig. 9, the fuel division ratio $DR_2$ increases as the intake air temperature $T_{AIR}$ increases and the possibility of occurrence of the pre-ignition increases. On the other hand, when the possibility of occurrence of the pre-ignition is decreased, the fuel division ratio $DR_1$ is increased which is translated to the increase of the first stage fuel amount to the total fuel amount leading to the promotion of the evaporation or atomization of the fuel and the uniform air fuel mixture.

The higher fuel pressure in the intake and compression stroke injection mode contributes to enhance the atomization or evaporation of the first stage fuel. It also contributes to supply enough amount of the second stage fuel in a shorter duration or secure the period for the atomization or evaporation of the second stage fuel until - the spark ignition.

The spark ignition after the top dead center during a cylinder cycle in the intake and compression stroke injection mode contributes to suppress the possibility of occurrence of knocking.

Thus, the present description provides for a method of controlling a spark ignited internal combustion engine having a fuel injector which injects fuel directly into a combustion into a combustion chamber comprising; injecting a first stage of fuel in the combustion chamber during a cylinder cycle, the first stage of fuel injected by early in a compression stroke during the cylinder cycle, and injecting a second stage of fuel, after injecting the first stage of fuel, the second stage of fuel injected by late in the compression stroke during the cylinder cycle, the amount of the second stage fuel being greater than the amount of the first stage fuel. Wherein said second amount of fuel is increased in relation to an air charge amount, engine speed, and intake air temperature. In one example, the second fuel amount increases as intake temperature increases.

It is needless to say that the invention is not limited to the illustrated embodiments, nor is the invention limited to the various improvements described herein. Therefore, alternative designs are possible without departing from the substance of the invention as claimed in the attached claims, as described below.

For example, in the embodiment described above, when the engine operating condition is in the area A2 illustrated in Fig. 6, the first and second stage fuels are injected during a cylinder cycle only if it is determined at the step S28 of the second routine R2 that the intake air temperature $T_{AIR}$ is higher than the predetermined temperature $T_{AIR1}$. However, no matter how much the intake air temperature $T_{AIR}$ is, the first and second stage fuel may be injected during a cylinder cycle if the engine temperature $T_{ENG}$ is higher than the predetermined temperature $T_{ENG1}$.

It should be understood that the embodiments herein are illustrative and not restrictive, since the scope of the invention is defined by the appended claims rather than by the description preceding them.

**Claims**

1. A method of controlling a spark ignited internal combustion engine having a fuel injector (53) which injects fuel directly into its combustion chamber (17), comprising:

    choosing an undivided intake stroke injection mode to inject fuel so as to complete the fuel injection by an early compression stroke or before the intake bottom dead center during a cylinder cycle when a speed of said engine is a first speed or higher; and
    choosing between an intake and compression stroke fuel injection mode to inject a first stage fuel so as to complete the first stage fuel injection by the early compression stroke during a cylinder cycle and to inject a second stage fuel in a late compression stroke during the cylinder cycle, an amount of said second stage fuel being greater than an amount of said first stage fuel, and a divided intake stroke injection mode to inject twice a half amount of fuel during an intake stroke in a cylinder cycle, the end of the fuel injection being in the early compression stroke at the latest, when an engine speed is less than a second speed that is less than said first speed and a desired torque of said engine is greater than a predetermined torque,
    wherein
    the intake and compression stroke fuel injection mode is chosen if the engine temperature ($T_{ENG}$) is higher than a first predetermined temperature ($T_{ENG1}$; S27) and an intake air temperature ($T_{AIR}$) is higher than a second predetermined temperature ($T_{AIR1}$; S28) or if the engine temperature ($T_{ENG}$) is higher than the first predetermined temperature ($T_{ENG1}$; S27), and the divided intake stroke injection mode is chosen if the engine temperature ($T_{ENG}$) is not higher than the first predetermined temperature ($T_{ENG1}$; S27) or the intake air temperature ($T_{AIR}$) is not higher than the second predetermined temperature ($T_{AIR1}$; S28).

2. The method as described in claim 1, further comprising decreasing a ratio of said amount of said second stage fuel to the total amount of said first and second stage fuel as an engine speed of said engine increases.

3. The method as described in any one of the preceding claims, further comprising increasing a ratio of said amount of said second stage fuel to the total amount of said first and second stage fuel as the desired torque of said engine is greater.

4. The method as described in any one of the preceding claims, further comprising increasing a ratio of said amount of said second stage fuel to the total amount of said first and second stage fuel as a temperature in said combustion chamber is higher.

5. The method as described in any one of the preceding claims, further comprising igniting the injected fuel with a spark after a top dead center of the compression stroke during the cylinder cycle when said second stage fuel is injected.

6. The method as described in any one of the preceding claims, further comprising:

    injecting the fuel at a first pressure when the fuel injection is completed by the early compression stroke during the cylinder cycle; and

injecting the fuel at a second pressure which is greater than said first pressure when said second stage fuel is injected.

7. The method as described in any one of the preceding claims, further comprising:

opening an intake valve (21) of said combustion chamber (17) after closing an exhaust valve (22) of said combustion chamber (17) during a cylinder cycle; and injecting said first stage fuel after said opening said intake valve (21) during a cylinder cycle.

8. The method as described in any one of the preceding claims, further comprising:

decreasing a negative valve overlap period by opening the intake valve (21) earlier during a cylinder cycle, as the desired engine torque increases.

9. Computer program product comprising computer-implemented instructions which, when loaded and executed on an engine controller (100), can perform the steps of a method of any one of the preceding claims 1 to 8.

10. A system comprising:

a spark ignited internal combustion engine; a fuel injector (53) which injects fuel directly into its combustion chamber (17); and a controller (100) configured to control said fuel injector (53):

in an undivided intake stroke injection mode to inject fuel so as to complete the fuel injection by an early compression stroke or before the intake bottom dead center during a cylinder cycle when a speed of said engine is a first speed; and in an intake and compression stroke fuel injection mode to inject a first stage fuel so as to complete the first stage fuel injection by the early compression stroke during a cylinder cycle and to inject a second stage fuel in a late compression stroke during the cylinder cycle, an amount of said second stage fuel being greater than an amount of said first stage fuel, or in a divided intake stroke injection mode to inject twice a half amount of fuel during an intake stroke in a cylinder cycle, the end of the fuel injection being in the early compression stroke at the latest, when an engine speed is less than a second speed that is less than said first speed and a desired torque of said engine is greater than a predetermined torque,

wherein the controller (100) is adapted such that the intake and compression stroke fuel injection mode is chosen if the engine temperature $(T_{ENG})$ is higher than a first predetermined temperature $(T_{ENG1}; S27)$ and an intake air temperature $(T_{AIR})$ is higher than a second predetermined temperature $(T_{AIR1}; S28)$ or if the engine temperature $(T_{ENG})$ is higher than the first predetermined temperature $(T_{ENG1}; S27)$, and the divided intake stroke injection mode is chosen if the engine temperature $(T_{ENG})$ is not higher than the first predetermined temperature $(T_{ENG1}; S27)$ or the intake air temperature $(T_{AIR})$ is not higher than the second predetermined temperature $(T_{AIR1}; S28)$.

11. The system as described in claim 10, wherein said spark ignited internal combustion engine has a geometric compression ratio of 14 or greater.

12. The system as described in any of the preceding claims 10 or 11, wherein said controller (100) being configured to control said fuel injector (53) to:

decrease a ratio of said amount of said second stage fuel to the total amount of said first and second stage fuel as an engine speed of said engine increases, and/or increase a ratio of said amount of said second stage fuel to the total amount of said first and second stage fuel as the desired torque of said engine is greater and/or a temperature in said combustion chamber is higher.

13. The system as described in any of the preceding claims 10 to 12, wherein a fuel system (54) of said engine is configured to:

inject the fuel at a first pressure when the fuel injection is completed by the early compression stroke during the cylinder cycle; and inject the fuel at a second pressure which is greater than said first pressure when said second stage fuel is injected; and/or

said controller (100) being configured to:

open an intake valve (21) of said combustion chamber (17) after closing an exhaust valve (22) of said combustion chamber (17) during a cylinder cycle; and inject said first stage fuel after said opening said intake valve (21) during a cylinder cycle.

**Patentansprüche**

1. Verfahren zur Steuerung einer fremdgezündeten Brennkraftmaschine mit einem Kraftstoffeinspritzvorrichtung (53), die Kraftstoff direkt in seine Brennkammer (17) einspritzt, das Folgendes umfasst:

wählen eines ungeteilten Einlasshub-Einspritzmodus, um Kraftstoff so einzuspritzen, dass die Kraftstoffeinspritzung durch einen frühen Kompressionshub oder vor dem unteren Totpunkt des Einlasses während eines Zylinderzyklus abgeschlossen wird, wenn eine Drehzahl des genannten Motors eine erste Geschwindigkeit aufweist oder höher ist; und
wählen zwischen
einem Einlass- und Kompressionshub-Kraftstoffeinspritzmodus zum Einspritzen eines Kraftstoffs der ersten Stufe, um die Kraftstoffeinspritzung der ersten Stufe durch den frühen Kompressionshub während eines Zylinderzyklus zu vervollständigen, und um einen Kraftstoff der zweiten Stufe in einem späten Kompressionshub während des Zylinderzyklus einzuspritzen, wobei eine Menge des genannten Kraftstoffs der zweiten Stufe größer ist als eine Menge des genannten Kraftstoffs der ersten Stufe, und
einem geteilten Einlasshub-Einspritzmodus zum Einspritzen von zweimal einer halben Menge Kraftstoff während eines Einlasshubes in einem Zylinderzyklus, wobei das Ende der Kraftstoffeinspritzung spätestens im frühen Verdichtungshub liegt, wenn eine Motordrehzahl kleiner als eine zweite Drehzahl ist, die kleiner als die genannte erste Drehzahl ist, und ein gewünschtes Drehmoment des genannten Motors größer als ein vorgegebenes Drehmoment ist,
wobei
der Einlass- und Kompressionshub-Kraftstoffeinspritzmodus gewählt wird, falls die Motortemperatur ($T_{ENG}$) höher als eine erste vorbestimmte Temperatur ($T_{ENG1}$; S27) und eine Ansauglufttemperatur ($T_{AIR}$) höher als eine zweite vorbestimmte Temperatur ($T_{AIR1}$; S28) ist, oder falls die Motortemperatur ($T_{ENG}$) höher als die erste vorbestimmte Temperatur ($T_{ENG1}$; S27) ist,
und wobei
der geteilte Einlasshub-Einspritzmodus gewählt wird, falls die Motortemperatur ($T_{ENG}$) nicht höher als die erste vorbestimmte Temperatur ($T_{ENG1}$; S27) oder die Ansauglufttemperatur ($T_{AIR}$) nicht höher als die zweite vorbestimmte Temperatur ($T_{AIR1}$; S28) ist.

2. Das Verfahren nach Anspruch 1, wobei das Verfahren ferner das Verringern eines Quotienten der genannten Menge des genannten Kraftstoffs der zweiten Stufe durch die Gesamtmenge des genannten Kraftstoffs der ersten und zweiten Stufe umfasst, wenn die Motordrehzahl des genannten Motors zunimmt.

3. Das Verfahren nach irgendeinem der vorstehenden Ansprüche, wobei das Verfahren ferner das Erhöhen eines Verhältnisses der genannten Menge des genannten Kraftstoffs der zweiten Stufe durch die Gesamtmenge des Kraftstoffs der ersten und zweiten Stufe umfasst, wenn das gewünschte Drehmoment des genannten Motors größer ist.

4. Das Verfahren nach irgendeinem der vorstehenden Ansprüche, wobei das Verfahren ferner das Erhöhen eines Quotienten der genannten Kraftstoffmenge der zweiten Stufe durch die Gesamtmenge des Kraftstoffs der genannten ersten und zweiten Stufe umfasst, wenn eine Temperatur in der genannten Brennkammer höher ist.

5. Das Verfahren nach irgendeinem der vorstehenden Ansprüche, wobei das Verfahren ferner das Zünden des eingespritzten Kraftstoffs mit einem Funken nach einem oberen Totpunkt des Kompressionshubes während des Zylinderzyklus umfasst, wenn der genannte Kraftstoff der zweiten Stufe eingespritzt wird.

6. Das Verfahren nach irgendeinem der vorstehenden Ansprüche, ferner umfassend:

das Einspritzen des Kraftstoffs mit einem ersten Druck, wenn die Kraftstoffeinspritzung durch den frühen Kompressionshub während des Zylinderzyklus abgeschlossen ist; und
das Einspritzen des Kraftstoffs mit einem zweiten Druck, der größer ist als der genannte erste Druck, wenn der genannte Kraftstoff der zweiten Stufe eingespritzt wird.

7. Das Verfahren nach irgendeinem der vorstehenden Ansprüche, ferner umfassend:

das Öffnen eines Einlassventils (21) der genannten Brennkammer (17) nach dem Schließen eines Auslassventils (22) der genannten Brennkammer (17) während eines Zylinderzyklus; und
das Einspritzen des genannten Kraftstoffs der ersten Stufe nach dem genannten Öffnen des genannten Einlassventils (21) während eines Zylinderzyklus.

8. Das Verfahren nach irgendeinem der vorstehenden Ansprüche, ferner umfassend:

das Verringern einer negativen Ventilüberlappungsperiode durch frühzeitiges Öffnen des Einlassventils (21) während eines Zylinderzyklus, wenn das gewünschte Motordrehmoment ansteigt.

9. Ein Computerprogrammprodukt, das computerimplementierte Anweisungen umfasst, die, wenn sie in eine Motorsteuerung (100) geladen und dort ausgeführt werden, die Schritte eines Verfahrens nach irgendeinem der vorstehenden Ansprüche von 1 bis 8 ausführen können.

10. Ein System, das Folgendes umfasst:

eine fremdgezündete Brennkraftmaschine;
eine Kraftstoffeinspritzvorrichtung (53), die Kraftstoff direkt in seine Brennkammer (17) einspritzt; und
eine Steuerung (100), die so konfiguriert ist, dass sie die Kraftstoffeinspritzvorrichtung (53) folgendermaßen steuert:

in einem ungeteilten Einlasshub-Einspritzmodus, um Kraftstoff so einzuspritzen, dass die Kraftstoffeinspritzung durch einen frühen Kompressionshub oder vor dem unteren Totpunkt des Einlasses während eines Zylinderzyklus abgeschlossen wird, wenn eine Drehzahl des genannten Motors eine erste Geschwindigkeit ist; und
in einem Einlass- und Kompressionshub-Kraftstoffeinspritzmodus, um einen Kraftstoff der ersten Stufe so einzuspritzen, dass die Kraftstoffeinspritzung der ersten Stufe durch den frühen Kompressionshub während eines Zylinderzyklus abgeschlossen wird, und um einen Kraftstoff der zweiten Stufe in einem späten Kompressionshub während des Zylinderzyklus einzuspritzen, wobei eine Menge des genannten Kraftstoffs der zweiten Stufe größer als eine Menge des genannten Kraftstoffs der ersten Stufe ist, oder in einem geteilten Einlasshub-Einspritzmodus zum Einspritzen von zweimal einer halben Kraftstoffmenge während eines Einlasshubes in einem Zylinderzyklus, wobei das Ende der Kraftstoffeinspritzung spätestens im frühen Verdichtungshub liegt, wenn eine Motordrehzahl kleiner als eine zweite Drehzahl ist, die kleiner als die genannte erste Drehzahl ist, und ein gewünschtes Drehmoment des genannten Motors größer als ein vorgegebenes Drehmoment ist,
wobei die Steuerung (100) derart angepasst ist, dass
der Einlass- und Kompressionshub-Kraftstoffeinspritzmodus gewählt wird, falls die Motortemperatur ($T_{ENG}$) höher ist als eine erste vorgegebene Temperatur ($T_{ENG1}$;

S27) und eine Ansauglufttemperatur ($T_{AIR}$) höher ist als eine zweite vorbestimmte Temperatur ($T_{AIR1}$; S28) ist, oder falls die Motortemperatur ($T_{ENG}$) höher ist als die erste vorgegebene Temperatur ($T_{ENG1}$; S27), und
der geteilte Einlasshub-Einspritzmodus gewählt wird, wenn die Motortemperatur ($T_{ENG}$) nicht höher ist als die erste vorgegebene Temperatur ($T_{ENG1}$; S27) oder die Ansauglufttemperatur ($T_{AIR}$) nicht höher ist als die zweite vorgegebene Temperatur ($T_{AIR1}$; S28).

11. Das System nach Anspruch 10, wobei die genannte fremdgezündete Brennkraftmaschine ein geometrisches Verdichtungsverhältnis von 14 oder mehr aufweist.

12. Das System nach irgendeinem der vorangehenden Ansprüche 10 oder 11, wobei die genannte Steuerung (100) so konfiguriert ist, dass sie die Kraftstoffeinspritzvorrichtung (53) steuert, zum:

Verringern eines Quotienten der genannten Menge des Kraftstoffs der zweiten Stufe durch die Gesamtmenge des genannten Kraftstoffs der ersten und zweiten Stufe, wenn die Motordrehzahl des genannten Motors zunimmt, und/oder
Erhöhen eines Quotienten der genannten Menge des genannten Kraftstoffs der zweiten Stufe durch die Gesamtmenge des genannten Kraftstoffs der ersten und zweiten Stufe, wenn das gewünschte Drehmoment des genannten Motors größer ist und/oder eine Temperatur in der genannten Brennkammer höher ist.

13. Das System nach irgendeinem der vorangehenden Ansprüche von 10 bis 12, wobei ein Kraftstoffsystem (54) des genannten Motors konfiguriert ist, um Folgendes zu bewerkstelligen:

Einspritzen des Kraftstoffs mit einem ersten Druck, wenn die Kraftstoffeinspritzung durch den frühen Verdichtungshub während des Zylinderzyklus abgeschlossen ist; und
Einspritzen des Kraftstoffs mit einem zweiten Druck, der größer ist als der genannte erste Druck, wenn der genannte Kraftstoff der zweiten Stufe eingespritzt wird; und/oder
wobei die genannte Steuerung (100) konfiguriert ist, um Folgendes zu bewerkstelligen:

Öffnen eines Einlassventils (21) der genannten Brennkammer (17) nach dem Schließen eines Auslassventils (22) der genannten Brennkammer (17) während eines Zylinderzyklus; und

Einspritzen des genannten Kraftstoffs der ersten Stufe nach dem genannten Öffnen des genannten Einlassventils (21) während eines Zylinderzyklus.

## Revendications

1. Procédé de commande d'un moteur à combustion interne à allumage par étincelle ayant un injecteur de carburant (53) qui injecte du carburant directement dans sa chambre de combustion (17), comprenant les étapes suivantes :

   choisir un mode d'injection par injection à course d'admission indivise pour injecter du carburant de manière à compléter l'injection de carburant par une course de compression précoce ou avant le point mort inférieur d'admission pendant un cycle de cylindre lorsqu'une vitesse dudit moteur est égale ou supérieure à une première vitesse; et

   choisir entre un mode d'injection de carburant à course d'admission et de compression pour injecter un carburant de premier stade de manière à compléter l'injection de carburant de premier stade par la course de compression précoce pendant un cycle de cylindre, et à injecter un carburant de deuxième stade dans une course de compression tardive pendant le cycle de cylindre, une quantité dudit carburant de deuxième stade étant supérieure à une quantité dudit carburant de premier stade, et

   un mode d'injection à course d'admission divisée pour injecter deux fois une demi-quantité de carburant pendant une course d'admission dans un cycle de cylindre, la fin de l'injection de carburant étant dans la course de compression précoce au plus tard, lorsqu'une vitesse de moteur est inférieure à une deuxième vitesse qui est inférieure à ladite première vitesse et qu'un couple désiré dudit moteur est supérieur à un couple prédéterminé,

   sachant que

   le mode d'injection de carburant de course d'admission et de compression est choisi si la température du moteur ($T_{ENG}$) est supérieure à une première température prédéterminée ($T_{ENG1}$; S27) et si la température de l'air d'admission ($T_{AIR}$) est supérieure à une deuxième température prédéterminée ($T_{AIR1}$; S28) ou si la température du moteur ($T_{ENG}$) est supérieure à la première température prédéterminée ($T_{ENG1}$; S27), et que

   le mode d'injection à course d'admission divisée est choisi si la température du moteur ($T_{ENG}$) n'est pas supérieure à la première température prédéterminée ($T_{ENG1}$; S27) ou si la température de l'air d'admission ($T_{AIR}$) n'est pas supérieure à la deuxième température prédéterminée ($T_{AIR1}$; S28).

2. Le procédé d'après la revendication 1, comprenant en outre le fait de réduire un rapport entre ladite quantité dudit carburant de deuxième stade et la quantité totale dudit carburant de premier et deuxième stade à mesure qu'augmente la vitesse de moteur dudit moteur.

3. Le procédé d'après une quelconque des revendications précédentes, comprenant en outre le fait d'augmenter un rapport entre ladite quantité dudit carburant de deuxième stade et la quantité totale dudit carburant de premier et deuxième stade, lorsque le couple désiré dudit moteur est supérieur.

4. Le procédé d'après une quelconque des revendications précédentes, comprenant en outre le fait d'augmenter un rapport entre ladite quantité dudit carburant de deuxième stade et la quantité totale dudit combustible de premier et deuxième stade, lorsqu'une température dans ladite chambre de combustion est plus élevée.

5. Le procédé d'après une quelconque des revendications précédentes, comprenant en outre le fait d'allumer du carburant injecté avec une étincelle après un point mort supérieur de la course de compression pendant le cycle du cylindre lorsque ledit carburant de deuxième stade est injecté.

6. Le procédé d'après une quelconque des revendications précédentes, comprenant en outre le fait de :

   injecter le carburant à une première pression lorsque l'injection de carburant est terminée par la course de compression précoce pendant le cycle du cylindre; et de

   injecter le carburant à une deuxième pression supérieure à ladite première pression lorsque ledit carburant de deuxième stade est injecté.

7. Le procédé d'après une quelconque des revendications précédentes, comprenant en outre le fait de :

   ouvrir une soupape d'admission (21) de ladite chambre de combustion (17) après avoir fermé une soupape d'échappement (22) de ladite chambre de combustion (17) pendant un cycle de cylindre; et

   injecter ledit carburant de premier stade après ladite ouverture de ladite soupape d'admission (21) pendant un cycle de cylindre.

8. Le procédé d'après une quelconque des revendications précédentes, comprenant en outre le fait de :

diminuer une période de chevauchement négatif des soupapes en ouvrant la soupape d'admission (21) plus tôt au cours d'un cycle de cylindre, lorsque le couple moteur désiré augmente.

**9.** Produit de programme informatique comprenant des instructions mises en oeuvre par ordinateur qui, lorsqu'elles sont chargées et exécutées dans une commande de moteur (100), peuvent exécuter les étapes d'un procédé d'après une quelconque des revendications précédentes de 1 à 8.

**10.** Un système comprenant:

un moteur à combustion interne à allumage par étincelle;
un injecteur de combustible (53) qui injecte du carburant directement dans sa chambre de combustion (17) ; et
une commande (100) configurée pour commander ledit injecteur de carburant (53):

dans un mode d'injection à course d'admission indivise pour injecter du carburant de façon à compléter l'injection de carburant par une course de compression précoce ou avant le point mort inférieur d'admission pendant un cycle de cylindre lorsqu'une vitesse dudit moteur est une première vitesse; et
dans un mode d'injection de carburant à course d'admission et de compression pour injecter un carburant de premier stade de façon à compléter l'injection de carburant de premier stade par la course de compression précoce pendant un cycle de cylindre, et pour injecter un carburant de deuxième stade dans une course de compression tardive pendant le cycle de cylindre, une quantité dudit carburant de deuxième stade étant supérieure à une quantité dudit carburant de premier stade, ou dans un mode d'injection à course d'admission divisée pour injecter deux fois une demi-quantité de carburant pendant une course d'admission dans un cycle de cylindre, la fin de l'injection de carburant étant dans la course de compression précoce au plus tard, lorsqu'une vitesse de moteur est inférieure à une deuxième vitesse qui est inférieure à ladite première vitesse et qu'un couple désiré dudit moteur est supérieur à un couple prédéterminé,
sachant que la commande (100) est adaptée de manière que

le mode d'injection de carburant à course d'admission et de compression est choisi si la température du moteur ($T_{ENG}$) est supérieure à une première température prédéterminée ($T_{ENG1}$; S27); et une température de l'air d'admission ($T_{AIR}$) est supérieure à une deuxième température prédéterminée ($T_{AIR1}$; S28) ou si la température du moteur ($T_{ENG}$) est supérieure à la première température prédéterminée ($T_{ENG1}$; S27), et
le mode d'injection de course d'admission divisée est choisi si la température du moteur ($T_{ENG}$) n'est pas supérieure à la première température prédéterminée ($T_{ENG1}$; S27) ou la température de l'air d'admission ($T_{AIR}$) n'est pas supérieure à la deuxième température prédéterminée ($T_{AIR1}$; S28).

**11.** Le système d'après la revendication 10, sachant que ledit moteur à combustion interne à allumage par étincelle présente un taux de compression géométrique égal ou supérieur à 14.

**12.** Le système d'après une quelconque des revendications précédentes 10 ou 11, sachant que ladite commande (100) est configurée pour commander ledit injecteur de carburant (53) pour :

diminuer un rapport entre ladite quantité dudit carburant de deuxième stade et la quantité totale dudit carburant de premier et deuxième stade à mesure qu'augmente la vitesse de moteur dudit moteur, et/ou pour
augmenter un rapport entre ladite quantité dudit carburant de deuxième stade et la quantité totale dudit carburant de premier et deuxième stade, lorsque le couple désiré dudit moteur est supérieur et/ou lorsqu'une température dans ladite chambre de combustion est plus élevée.

**13.** Le système d'après une quelconque des revendications précédentes de 10 à 12, sachant qu'un système de carburant (54) dudit moteur est configuré pour :

injecter le carburant à une première pression lorsque l'injection de carburant est terminée par la course de compression précoce pendant le cycle du cylindre; et pour
injecter le carburant à une deuxième pression supérieure à ladite première pression lorsque ledit carburant de deuxième stade est injecté; et/ou
ladite commande (100) étant configurée pour :

ouvrir une soupape d'admission (21) de ladite chambre de combustion (17) après avoir fermé une soupape d'échappement (22) de ladite chambre de combustion (17) pendant un cycle de cylindre; et pour injecter ledit carburant de premier stade après ladite ouverture de ladite soupape d'admission (21) pendant un cycle de cylindre.

FIG. 1

EP 2 169 202 B1

Routine R1

START

Read Various Signals ⟶ S1

Determine Target Torque $TQ_D$ Based on Accelerator Position $\alpha$, Engine Speed $N_{ENG}$ and Vehicle Speed VSP ⟶ S2

Determine Fuel Amount FP, Target Air Charge $CE_D$ and Ignition Timing SA Based on Target Torque $TQ_D$ and Engine Speed $N_{ENG}$ ⟶ S3

Determine Target Angular Phase $\theta_{INT\_D}$ of Intake Camshaft Based on Target Air Charge $CE_D$ and Engine Speed $N_{ENG}$ ⟶ S4

Determine Target Angular Phase $\theta_{EXH\_D}$ of Exhaust Camshaft Based on Target Air Charge $CE_D$ and Engine speed $N_{ENG}$ ⟶ S5

Determine Target Throttle Valve Opening $TVO_D$ Based on Target Air Charge $CE_D$ and Engine speed $N_{ENG}$ ⟶ S6

Read Fuel Injection Pulses FP0, FP1, FP2, FP3 and/or FP4 and Fuel Pressure $P_{FUEL}$ from Computational Result of Routine R2 ⟶ S7

Drive Actuators According to Computed Values ⟶ S8

RETURN

FIG. 2

**Routine R2**

FIG. 3

## Target Intake Cam Phase θ<sub>INT_D</sub>

Max. Charge

Target Air Charge CE$_D$

Advance

Retard

Retard

Advance

Retard

Retard

N$_1$

Engine Speed N$_{ENG}$

FIG. 4

## Valve Overlap

Max. Charge

Target Air Charge CE$_D$

Positive

Negative

N$_1$

Engine Speed N$_{ENG}$

FIG. 5

Intake and Compression Stroke Injection or Divided Intake Stroke Injection

Fuel Injection

A2

A3

Divided Intake Stroke Injection

A4

Undivided Intake Stroke Injection

A1

Undivided Intake Stroke Injection

$N_{ENG1}$

Engine Speed $N_{ENG}$

Target Air Charge $CE_D$

FIG. 6

FIG. 7

## Fuel Division Ratios DR$_1$ and DR$_2$

A2

Target Air Charge CE$_D$

Max. Charge

DR$_1$ Decreases and DR$_2$ Increases

CE$_{D1}$

Engine Speed N$_{ENG}$

N$_{ENG1}$

FIG. 8

## Fuel Division Ratios at N$_{ENG1}$ and CE$_{D1}$

0.4

DR$_1$

0.2

DR$_1$ + DR$_2$ = 1

0.8

DR$_2$

0.6

Intake Air Temperature T$_{AIR}$

FIG. 9

FIG. 10

**EP 2 169 202 B1**

**REFERENCES CITED IN THE DESCRIPTION**

**Patent documents cited in the description**

- US 20070227503 A1
- EP 0849459 A1
- WO 0052317 A